# EUROPEAN PATENT APPLICATION

(11) **EP 1 033 828 A2**
(43) Date of publication of application: **06.09.2000**
(21) Application number: 00104687.9
(22) Date of filing: 03.03.2000
(51) Int. Cl.: H04B 7/185

(54) **Supplemental satellite function enhancement technique**

(30) Priority: 04.03.1999 US 262551
(71) Applicant: TRW Inc., Redondo Beach, California 90278 (US)
(72) Inventor: Saunders, Oliver, Los Angeles, CA 90066 (US)
(74) Representative: Schmidt, Steffen J., Dipl.-Ing.

(57) **Abstract**

Apparatus for enhancing the functional capabilities of a satellite communication system including an uplink receiver 40 deployable with a first satellite 20. A first function apparatus 50 deployable on satellite 20 is capable of processing signals from uplink receiver 40. A link terminal 60 deployable with satellite 20 is capable of receiving signals processed by a second function apparatus (234, 254) from a second intersatellite communication link terminal 220 deployable with a second satellite 200. A first switch 100 deployable with satellite 20 enables signals from uplink receiver 40 to be utilized by communication link terminal 60 or first functions apparatus. A downlink transmitter 80 deployable with satellite 20 is capable of transmitting signals to a ground based communication station 90. A second switch 110 deployable with satellite 20 enables signals from communication link terminal 60 or first function apparatus 50 to be utilized by downlink transmitter 80.

## Description

### BACKGROUND OF THE INVENTION

This invention relates to enhancing the functional capabilities of a core satellite communication system, and more particularly relates to such a system in which supplemental functions can be performed aboard a supplemental satellite launched after the core satellite.

The long operational lifetimes of orbiting communication satellites or spacecraft present a dilemma for designers of the electronic systems included in such spacecraft. Large, high capacity spacecraft are expensive, and their associated launch costs are substantial. As a result, there is a tendency to procure the largest, longest lifetime spacecraft possible.

However, deploying spacecraft with the longest lifetime possible presents problems in the context of the present communications industry which is changing rapidly and which is expected to serve new markets and provide new services in the not too distant future. However, the details of the new markets and services are not clear and have not been defined. With spacecraft communications in such a state of flux, some consultants have publicly advised against deploying spacecraft with operational lifetimes longer than about five years.

There is a need for an approach which allows deployment of large, expensive spacecraft optimized with an alterable basic functionality which can be changed at a future time to a new form of function that might not exist at the time of launch.

Communication satellites are generally deployed in a defined orbital slot which consists of a geographical location and a band of frequencies which are authorized for receipt and transmission of communication signals. The acquisition of an orbital slot requires substantial effort and expense. There is a need for communication circuit techniques which enable the investment in an orbital slot to be protected by changing the functions performed by an initial core spacecraft which is assigned to the orbital slot.

There also is a need for techniques which permit a spacecraft's functions to be altered or modified possibly multiple times, during its operational lifetime. The present invention enables the performed functions to be altered with a degree of economy and ease which is not available by using any of the known prior techniques.

### BRIEF SUMMARY OF THE INVENTION

One object of the present invention is to provide components suitable for performing one function which can be placed on a core or initial satellite and which enable and facilitate communication with a supplemental satellite suitable for performing a second function launched after the core satellite is placed into an orbital slot.

Another object of the invention is to provide components suitable for launching on a core satellite which perform at least one function immediately upon deployment, but which facilitate communication with additional components launchable with a less expensive supplemental satellite if there is a need for a change in the functions performed by the core satellite.

Yet another object of the present invention is to provide components suitable for launching with a core satellite to allow communication with a supplemental satellite on which a new or modified function can be carried out, but which does not require duplication of the uplinks and downlinks built into the core satellite.

By using a component arrangement of the foregoing type, unprocessed or semi-processed signals received by the core satellite may be routed to a supplemental satellite over an intersatellite link where they can be used to perform a new or modified function. The new function outputs then may be sent back to the core satellite over the intersatellite link, if necessary, and inserted into a downlink signal chain for downlink transmission or may be further processed by circuitry located on the core satellite.

In one embodiment of the invention, there is an uplink receiver which is deployable with a first satellite and which is capable of receiving communication signals from a ground based communication station. A first function apparatus, such as a bent pipe repeater, is deployable on the first satellite and is capable of performing a first function in response to signals from the uplink receiver. An intersatellite communications link terminal, deployable with the first satellite, is capable of transmitting signals to a second function apparatus deployable with a second satellite launched after the first satellite. The link terminal also is capable of receiving signals generated by the second function apparatus, if necessary, from a second communication link terminal deployable with the second satellite. A first switch, deployable with the first satellite, enables signals from the uplink receiver to be utilized by the first intersatellite communication link terminal or the first function apparatus. A downlink transmitter, deployable with the first satellite, is capable of transmitting signals to a ground based communication station. A second switch, if necessary, is deployable with the first satellite, and enables signals from the first intersatellite link terminal or the first function apparatus to be utilized by the downlink transmitter.

By employing apparatus of the foregoing type, the functional capabilities of the first satellite can be enhanced by launching the second satellite, preferably into the orbital slot of the first satellite. The new or modified functions can be performed on the second satellite. If necessary, the results may be transmitted to the first satellite for further processing and/or for communication through the downlink transmitter to the ground based communication station. By using apparatus and methods of the foregoing type, the functions performed by the satellite communication system can be altered and modified with a degree of ease and economy and not available by the use of the known prior techniques.

### BRIEF DESCRIPTION OF THE DRAWINGS

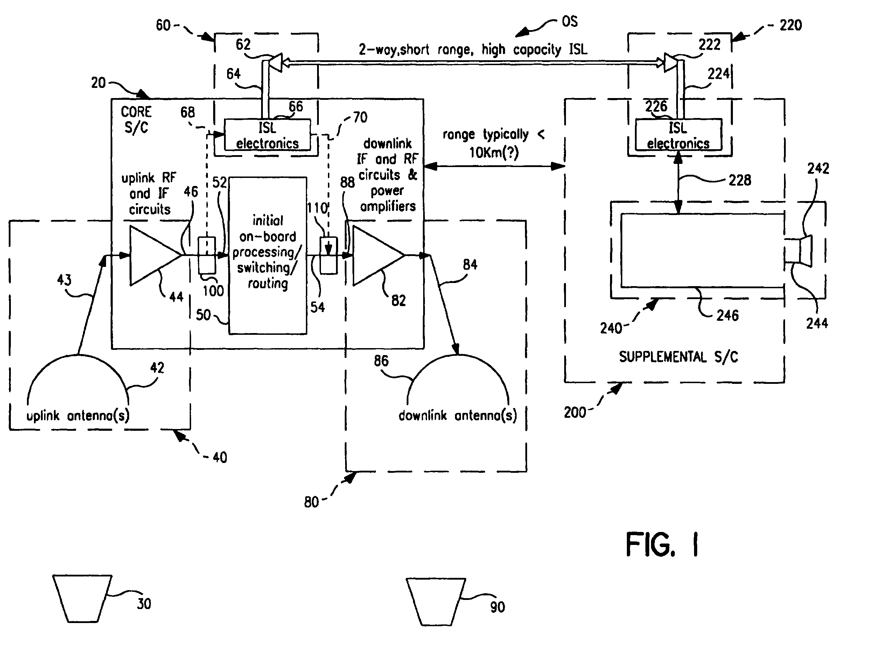

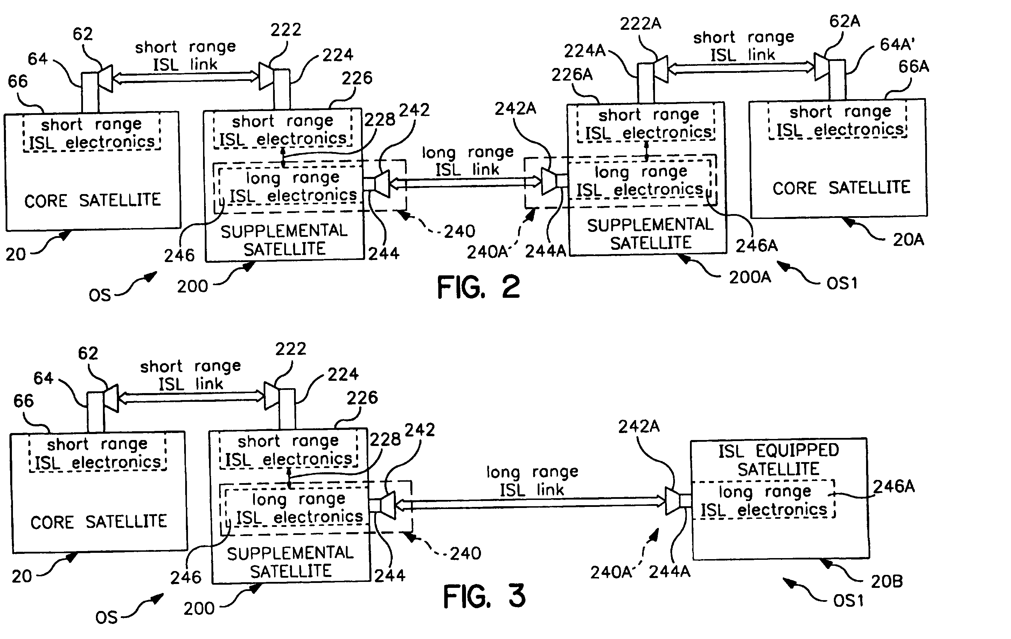

The foregoing advantages and features of the present invention will appear for purposes of illustration, but not of limitation, in connection with the accompanying drawing wherein like numbers refer to like parts throughout and wherein Figure 1 is a schematic block diagram of a preferred form of satellite communication system embodying the present invention.

### DETAILED DESCRIPTION OF THE INVENTION

Referring to Figure 1, a preferred form of the invention is deployable on a conventional core satellite 20 suitable for launching into an orbital slot OS. Radio frequency communication signals are transmitted to the satellite 20 from a conventional ground-based communication station 30. The radio signals are received by an uplink receiver 40 having an output 46 and comprising a radio frequency antenna 42 which transmits radio frequency carrier signals over a lead 43 to a conventional converter 44 which converts the radio carrier frequency signals to intermediate frequency (IF) signals.

A processor 50 may be provided on core satellite 20 and connected as shown to perform a function. For example, the processor may be a conventional repeater transponder also known as a non-regenerative repeater or bent pipe which receives the IF signals from receiver 40 and shifts the frequency to the downlink band. In addition, processor 50 may perform onboard IF switching. Processor 50 has an input 52 and an output 54 arranged as shown.

The preferred form the invention also includes an intersatellite communication link terminal 60 which is suitable for launching on core satellite 20. The terminal includes an antenna 62 which transmits and receives radio frequency signals that are transmitted over a lead 64 to conventional link electronics 66. Terminal 60 has an input 68 and an output 70 arranged as shown. The terminal comprises a conventional two-way, short-range, high-capacity intersatellite link which is known to those skilled in the art.

The preferred form of the invention also includes a conventional downlink transmitter 80 suitable for launching on core satellite 20. Transmitter 80 includes a transmitter module 82 which receives IF signals from processor 50, amplifies those signals and transforms them to radio frequency carrier signals suitable for transmission over a lead 84 to a conventional downlink antenna 86. The radio frequency carrier signals from antenna 86 are suitable for transmission to a conventional ground-based communication station 90. Transmitter 80 has an input 88 connected as shown.

The preferred form of the invention also includes a switch 100 deployable on satellite 20 and suitable for switching signals from output 46 to either input 52 of processor 50 or input 68 of link terminal 60. Such switches are well known to those skilled in the art and may take various forms. For example, switch 100 may be arranged as gates which allow signals from receiver 40 to proceed through terminal 60 and/or processor 50. In another form, switch 100 may be gates which apply power to portions of terminal 60 or processor 50 so that signals may be utilized by them. All of these possible forms of switch 100 are means for enabling signals from receiver 40 to be utilized by terminal 60 and/or processor 50.

The preferred form of the invention also includes another switch 110 like switch 100 deployable on core satellite 20 and suitable for switching signals to input 88 of downlink transmitter 80 from output 70 of link terminal 60 or output 54 of processor 50. Switch 110 may take additional forms similar to those described in connection with switch 100. The various forms of switch 110 comprise means for enabling signals from terminal 60 and/or processor 50 to be utilized by terminal 80.

Switches 100 and 110 may initiate switching or gating in response to information carried by signals, such as the signals received by receiver 40 and terminal 60. Such switches are well known.

In this application, signals include various characteristics of signals, such as signal carrier or envelope, and information or data embodied in the signals to be utilized.

The above-described apparatus facilitates the supplementation of the functions performed by satellite 20 by use of a supplemental satellite 200 which may be launched into orbital slot OS after satellite 20 is already in that orbital slot. The apparatus deployable on satellite 200 includes an intersatellite communication link terminal 220 which may be identical to terminal link 60. Link terminal 220 includes an antenna 222 which transmits radio frequency signals over a lead 224 to conventional link electronics 226. Cable 228 transmits signals from terminal 220 to conventional laser communication electronics 230 which processes the signals for transmission over a cable 232 to a conventional laser beam module 234. In a well known manner, module 234 generates a laser beam 235 modulated to include information received from terminal 220. Beam 235 is transmitted to a conventional space-ground laser earth terminal 236 which also can generate a laser beam 237 modulated to include information for transmission to satellite 200. Beam 237 is demodulated by module 234, and the resulting information signal is transmitted over cable 232 to module 234 which prepares the signal for transmission over cable 228 to terminal electronics 226. The signal then may be transmitted from terminal 220 to terminal 60.

Satellite 200 also includes a conventional infrared earth monitor module 250 which comprises a lens 252 and an infrared radiation detector 254 which converts infrared radiation received from the earth to a corresponding electrical signal that is transmitted over a lead 256 to a conventional infrared communication electronics module 258. Module 258 processes the signals to place them in a form suitable for transmission by terminal 220 and sends them over a lead 260 to terminal electronics 226. The signals then are transmitted from terminal 220 to terminal 60.

Link terminals 60 and 220 communicate with each other over a short range of distance within orbital slot OS which may typically be about 10-20 kilometers.

The preferred embodiment is used by placing the above-described components on core satellite 20 and launching the satellite into orbital slot OS. At some future time, when the marketplace shows a need for new services, supplemental satellite 200 is designed to implement the specific functions required to achieve the desired new services. Note that only the new function apparatus is incorporated into satellite 200. The uplink receiver 40 and downlink transmitter 80 remain on core satellite 20 and are not needed in supplemental satellite 200. Supplemental satellite 200 is positioned in orbital slot OS near core satellite 20 and communicates with the core satellite via link terminal 60 and link terminal 220.

The foregoing embodiment of the invention allows a satellite system operator to defer the design of equipment for services offered in the future until new and different markets are identified and/or the required technology or protocols have time to mature. A spacecraft, such as satellite 20, can be launched and activated and then, through the use of supplemental satellite 200, its performed functions can be altered or expanded to meet changing market conditions or operational requirements. In this way, an orbital slot, such as OS, can be populated with a core satellite having a productive lifetime which is protected from obsolescence.

By using the foregoing embodiment, satellite 200 may be used to add new or modified functions, such as laser communications or earth infrared mapping, to move the new functions into orbital slot OS and to enable the new functions via terminals 60 and 220.

The preferred embodiment may be altered and modified without departing from the true spirit and scope of the invention as defined in the accompanying claims. For example, orbital slot OS may involve GEO, LEO, MEO or HEO orbits. The only requirement is that the supplemental satellite 200 be able to stationkeep in close proximity to core satellite 20 during its normal movements. Link terminal 60 and 220 may comprise various types of intersatellite links, including both radio frequency and laser links along with various multiplexing and modulation techniques that could be used to carry information. The points in the core satellite's up-link and down-link signal path at which the signals or information to and from supplemental satellite 200 can be extracted or introduced may be varied and modified from the positions shown and implemented by switches 100 and 110. Those skilled in the art will recognize that intermediate points in the core satellite's original processing flow may be used to extract signals to be sent to a supplemental satellite 200. The invention is not limited to the particular points illustrated by the placement of switches 100 and 110.

## Claims

1. In a satellite communication system, improved apparatus for enhancing the functional capabilities of said system comprising in combination:
an uplink receiver deployable with a first satellite suitable for launching into an orbital slot and capable of receiving communication signals from a ground-based communication station;
a first function apparatus deployable with said first satellite and capable of performing a first function in response to said signals from said uplink receiver;
a first intersatellite communication link terminal deployable with said first satellite and capable of transmitting at least some of said signals from said uplink receiver to a second function apparatus deployable with a second satellite, said second satellite launched after said first satellite, said second function apparatus being capable of performing a second function;
a first switch deployable with said first satellite and enabling signals from said uplink receiver to be utilized by said first intersatellite communication link terminal or said first function apparatus; and
a downlink transmitter deployable with said first satellite and capable of transmitting signals responsive to performance of at least said first function apparatus to said ground-based communication station, whereby the functional capabilities of said first satellite can be enhanced by launching said second satellite after said first satellite is in said first orbital slot.

2. Apparatus, as claimed in claim 1, wherein said first intersatellite communication link terminal is capable of receiving signals responsive to operation of said second function apparatus and further comprising:
a second switch deployable with said first satellite and enabling signals from said first intersatellite communication link terminal or said first function apparatus to be utilized by said downlink transmitter, whereby signals responsive to operation of said second function apparatus or said first function apparatus can be transmitted to said ground-based communication station.

3. Apparatus, as claimed in claim 1, wherein said second satellite is capable of being launched into said orbital slot, whereby the processing supported at said orbital slot may be enhanced.

4. Apparatus, as claimed in claim 3, wherein said first intersatellite communication link terminal comprises a portion of a two way intersatellite link with sufficient range to enable communication between said first and second satellites and sufficient capacity to enable the processing and transmission of said signals within said orbital slot.

5. Apparatus, as claimed in claim 1, wherein said second function comprises laser communication between said second satellite and a ground-based laser terminal and wherein said second function apparatus comprises laser communication circuits.

6. In a satellite communication system, improved apparatus for enhancing the functional capabilities of said system comprising in combination:
an uplink receiver deployable with a first satellite suitable for launching into an orbital slot and capable of receiving communication signals from a ground-based communication station;
a first function apparatus deployable with said first satellite and capable of performing a first function in response to said signals from said uplink receiver;
a first intersatellite communication link terminal deployable with said first satellite and capable of transmitting at least some of said signals from said uplink receiver;
a second intersatellite communication link terminal deployable with a second satellite launched after said first satellite and capable of receiving signals from said first intersatellite communication link terminal;
a second function apparatus deployable with said second satellite launched after said first satellite and capable of performing a second function in response to signals received from said second intersatellite communication link terminal;
a first switch deployable with said first satellite and enabling signals from said uplink receiver to be utilized by said first intersatellite communication link terminal or said first function apparatus; and
a downlink transmitter deployable with said first satellite and capable of transmitting signals responsive to performance of at least said first function apparatus to said ground-based communication station, whereby the functional capabilities of said first satellite can be enhanced by launching said second satellite after said first satellite is in said first orbital slot.

7. Apparatus, as claimed in claim 6, wherein said second intersatellite communication link terminal is capable of transmitting signals responsive to operation of second function apparatus and said first intersatellite communication link terminal is capable of receiving signals from said second intersatellite communication link terminal and further comprising:
a second switch deployable with said first satellite and enabling signals from said first intersatellite communication link terminal or said first function apparatus to be utilized by said downlink transmitter, whereby signals responsive to operation of said second function apparatus or said first function apparatus can be communicated to said ground-based communication station.

8. Apparatus, as claimed in claim 6, wherein said first and second intersatellite communication link terminals comprise a two way intersatellite link with sufficient range to enable communication between said first and second satellites and sufficient capacity to enable the processing and transmission of said signals within said orbital slot.

9. Apparatus, as claimed in claim 6, wherein said second function comprises laser communication between said second satellite and a ground-based laser terminal and wherein said second function apparatus comprises laser communication circuits.

10. In a satellite communication system, improved apparatus for enhancing the functional capabilities of said system comprising in combination:
uplink receiver means deployable with a first satellite suitable for launching into an orbital slot, said uplink receiver means being for receiving communication signals from a ground-based communication station;
first function means deployable with said first satellite for performing a first function in response to said signals from said uplink receiver means;
first intersatellite communication link terminal means deployable with said first satellite for transmitting at least some of said signals from said uplink receiver means to a second function means deployable with a second satellite launched after said first satellite, said second function means being for performing a second function;
first means deployable with said first satellite for enabling signals from said uplink receiver to be utilized by said first intersatellite communication link terminal means or said first function means; and
downlink transmitter means deployable with said first satellite for transmitting signals responsive to performance of at least said first function means to said ground-based communication station, whereby the functional capabilities of said first satellite can be enhanced by launching said second satellite after said first satellite is in said first orbital slot.

11. Apparatus, as claimed in claim 10, wherein said first intersatellite communication link terminal means comprises means for receiving signals responsive to operation of said second function apparatus and wherein said system further comprises:
second means deployable with said first satellite for enabling signals from said first intersatellite communication link terminal means or from said first function means to be utilized by said downlink transmitter means, whereby signals responsive to operation of said second function means or said first function means can be transmitted to said ground-based communication station.

12. Apparatus, as claimed in claim 10, wherein said second function comprises laser communication between said second satellite and a ground-based laser terminal and wherein said second function means comprises laser communication circuits.

13. In a satellite communication system, improved apparatus for enhancing the functional capabilities of said system comprising in combination:
uplink receiver means deployable with a first satellite suitable for launching into an orbital slot, said uplink receiver means being for receiving communication signals from a ground-based communication station;
first function means deployable with said first satellite for performing a first function in response to said signals from said uplink receiver means;
first intersatellite communication link terminal means deployable with said first satellite for transmitting at least some of said signals from said uplink receiver means;
second intersatellite communication link terminal means deployable with a second satellite launched after said first satellite for receiving signals from said first intersatellite communication link terminal means;
second function means deployable with said second satellite for performing a second function in response to signals received from said second intersatellite communication link terminal means;
first means deployable with said first satellite for enabling signals from said uplink receiver means to be utilized by said first intersatellite communication link terminal or to said first function means; and
downlink transmitter means deployable with said first satellite for transmitting signals responsive to performance of at least said first function means to said ground-based communication station, whereby the functional capabilities of said first satellite can be enhanced by launching said second satellite after said first satellite is in said first orbital slot.

14. Apparatus, as claimed in claim 13, wherein said second intersatellite communication link terminal means comprises means for transmitting signals responsive to operation of second function means and said first intersatellite communication link terminal means comprises means for receiving signals from said second intersatellite communication link terminal means and further comprising:
second means deployable with said first satellite for enabling signals from said first intersatellite communication link terminal means or from said first function means to be utilized by said downlink transmitter means, whereby signals responsive to operation of said second function means or said first function means can be communicated to said ground-based communication station.

15. Apparatus, as claimed in claim 13, wherein said first and second intersatellite communication link terminal means comprise a two way intersatellite link with sufficient range for enabling communication between said first and second satellites and sufficient capacity for enabling the processing and transmission of said signals within said orbital slot.

16. Apparatus, as claimed in claim 13, wherein said second function comprises laser communication between said second satellite and a ground-based laser terminal and wherein said second function means comprises laser communication circuits.

17. In a satellite communication system comprising an uplink receiver deployable with a first satellite, a downlink transmitter deployable with said first satellite, a first function apparatus deployable with said first satellite, and a first intersatellite communication link terminal deployable with said first satellite, an improved method of enhancing the functional capability of the system comprising in combination the steps of:
receiving communication signals at said uplink receiver; and
enabling signals from said uplink receiver to be utilized by said first function apparatus or said first intersatellite communication link terminal, whereby said signals may be utilized by said first function apparatus on said first satellite or transmitted to a second satellite by said first intersatellite communication link terminal for use by a second function apparatus deployed with said second satellite and capable of performing a second function so that the functional capabilities of said first satellite may be enhanced.

18. A method, as claimed in claim 17, wherein said satellite communication system further comprises a second intersatellite communication link terminal deployable with a second satellite and a second function apparatus deployable with said second satellite and wherein said method further comprises the steps of:
transmitting said signals from said first intersatellite communication link terminal to said second intersatellite-communication link terminal;
performing a second function in response to said signals transmitted to said second intersatellite communication link terminal by utilizing said second function apparatus;
transmitting signals resulting from performance of said second function from said second intersatellite communication link terminal to said first intersatellite communication link terminal; and
enabling signals from said first function apparatus or said first intersatellite communication link terminal to be utilized by said downlink transmitter, whereby signals resulting from performance of said second function or said first function can be transmitted to earth.
